(19) Europäisches Patentamt
European Patent Office
Office européen des brevets

(11) EP 3 066 141 B1

(12) EUROPÄISCHE PATENTSCHRIFT

(45) Veröffentlichungstag und Bekanntmachung des Hinweises auf die Patenterteilung:
**23.12.2020 Patentblatt 2020/52**

(21) Anmeldenummer: **14793495.4**

(22) Anmeldetag: **28.10.2014**

(51) Int Cl.:
***C08G 18/48*** (2006.01) ***C08G 18/66*** (2006.01)
***C08G 18/75*** (2006.01) ***C08G 18/08*** (2006.01)
***C08G 18/22*** (2006.01) ***C08G 18/24*** (2006.01)
***C09D 175/04*** (2006.01)

(86) Internationale Anmeldenummer:
**PCT/EP2014/073078**

(87) Internationale Veröffentlichungsnummer:
**WO 2015/063062 (07.05.2015 Gazette 2015/18)**

(54) **VERFAHREN ZUR HERSTELLUNG VON TRANSPARENTEM, THERMOPLASTISCHEM POLYURETHAN MIT HOHER MECHANISCHER FESTIGKEIT UND HÄRTE**

PROCESS FOR THE PRODUCTION OF TRANSPARENT, THERMOPLASTIC POLYURETHANE WITH HIGH MECHANICAL STRENGTH AND HARDNESS

PROCÉDÉ DE FABRICATION DE POLYURÉTHANE THERMOPLASTIQUE TRANSPARENT AYANT UNE SOLIDITÉ MÉCANIQUE ET UNE DURETÉ ÉLEVÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.11.2013 EP 13191374**

(43) Veröffentlichungstag der Anmeldung:
**14.09.2016 Patentblatt 2016/37**

(73) Patentinhaber: **BASF SE**
**67056 Ludwigshafen am Rhein (DE)**

(72) Erfinder:
- **PRISSOK, Frank**
**49448 Lemförde (DE)**
- **HARTWIG, Sebastian**
**48147 Münster (DE)**
- **BOKERN, Stefan**
**28209 Bremen (DE)**
- **LIESE, Julia**
**28201 Bremen (DE)**

(74) Vertreter: **BASF IP Association**
**BASF SE**
**GBI-C006**
**67056 Ludwigshafen (DE)**

(56) Entgegenhaltungen:
**EP-A1- 1 810 983**
**EP-A2- 0 358 406**
**JP-A- 2006 321 950**

EP 3 066 141 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft thermoplastische Polyurethane erhältlich oder erhalten durch Umsetzung von mindestens einem aliphatischen Diisocyanat, mindestens einem Diol mit einem Molekulargewicht Mw < 220 g/mol als Kettenverlängerer, und mindestens einer Polyolzusammensetzung, wobei die Polyolzusammensetzung ein Polyol ausgewählt aus der Gruppe bestehend aus Polyetherolen und mindestens ein Bisphenol-Derivat umfasst, ausgewählt aus der Gruppe bestehend aus Bisphenol-A-Derivaten mit einem Molekulargewicht Mw > 315 g/mol und Bisphenol-S-Derivaten mit einem Molekulargewicht Mw > 315 g/mol, wobei mindestens eine der OH-Gruppen des Bisphenol-Derivats alkoxyliert ist, wobei das Polyetherol ausgewählt ist aus der Gruppe bestehend aus Polyethyleneglykolen, Polypropylenglykolen und Polytetrahydrofuranen, wobei der Kettenverlängerer und das Bisphenol-Derivat in einem molaren Verhältnis von 3:1 bis 1:1 eingesetzt werden, sowie Verfahren zur Herstellung derartiger thermoplastischer Polyurethane und die Verwendung eines erfindungsgemäßen thermoplastischen Polyurethans zur Herstellung von Extrusionsprodukten, Folien und Formkörpern.

Thermoplastische Polyurethane für verschiedene Anwendungen sind aus dem Stand der Technik grundsätzlich bekannt. Durch die Variation der Einsatzstoffe können unterschiedliche Eigenschaftsprofile erhalten werden.

So zeigen thermoplastische Polyurethane (TPU) auf der Basis aromatischer Isocyanate gute mechanische Eigenschaften und lassen sich gut verarbeiten. Ein Grund hierfür ist die im thermoplastischen Polyurethan vorliegende Teilkristallinität. Sie besitzen allerdings entscheidende Nachteile: sie sind nicht lichtecht und verfärben sich bei Outdoor-Anwendungen, in der Hitze oder bei UV-Bestrahlung schnell; ihre Transparenz reicht für Anwendungen, bei denen dickwandige Teile hergestellt werden, oder für Anwendungen im Lichtleiterbereich nicht aus.

Thermoplastische Polyurethane auf der Basis aliphatischer Isocyanate besitzen eine gute Lichtechtheit, lassen sich aber aufgrund der fehlenden Kristallinität nur schwer verarbeiten und besitzen im Gegensatz zu aromatischem TPU nur eine geringe mechanische Festigkeit und Härte. Im Falle aliphatischer HDI (Hexamethylendiisicyanat) -basierter Systeme weisen diese eher schlechtere Kristallinität und Verarbeitbarkeit auf.

Im Stand der Technik werden verschiedene Ansätze zur Verbesserung der Eigenschaftsprofile von thermoplastischen Polyurethanen beschrieben.

EP 1 674 494 beschreibt ein versinterbares aliphatisches thermoplastisches Polyurethan, wobei auch die mögliche Verwendung von Bisphenol A bis (2-hydroxyethyl) als Kettenverlängerer in Kombination mit einem Polyol mit einem Molekulargewicht zwischen 450 g/mol und 10000 g/mol erwähnt wird. Bei diesem Molekül handelt es sich unvorteilhafterweise bei Raumtemperatur um einen Feststoff mit hoher Schmelzviskosität, was die Verarbeitung erschwert. Der Einfluss auf Lichtechtheit und mechanischen Eigenschaften wird nicht beschrieben.

EP 1 394 189 beschreibt flammgeschützte thermoplastische Polyurethane herstellbar aus aliphatischen Diisocyanaten, einem Polyol mit einem Molekulargewicht zwischen 450 g/mol und 10000 g/mol, mindestens einer organischen phosphorhaltigen Verbindung auf Basis eines Phosphonats und/oder Phosphinoxids und einem Kettenverlängerer, der auch 1,4-Di ($\beta$-hydroxyethyl)-Bisphenol A sein kann. Der Fokus dieser Anmeldung ist auf die selbstlöschenden Eigenschaften des thermoplastischen Polyurethans gerichtet.

Auch EP 0 358 406 A2 offenbart thermoplastische Polyurethane, die auch Bisphenol-Derivate umfassen können, die als dünne Schutzschicht oder Coating über Lösemittel aufgetragen selbstheilende Eigenschaften zeigen können.

US 2011/0281965 erwähnt den Einsatz des Kettenverlängerers 4,4'-Dioxethoxydiphenyldimethylmethan als Reaktionsprodukt von Bisphenol A und 2 Mol Ethylenoxid bei der Herstellung von Polyurethanen auf aliphatischer Basis für optische Anwendungen in Polyurethan-Gießelastomersystemen mit oben angesprochenen Nachteilen.

JP 2006321950A beschreibt den Einsatz von alkoxylierten Bisphenol A-Komponenten in Gießelastomeranwendungen mit Fokus auf HDI-Trimeren als Isocyanate. Diese Materialien sind nicht für die thermoplastische Verarbeitung geeignet. Zudem sind als Beispiele ausschließlich bei Raumtemperatur feste alkoxylierte Bisphenol A-Komponenten genannt.

Bisher ist es daher nicht hinreichend gelungen, thermoplastische Polyurethane zur Verfügung zu stellen, die sehr gute mechanische Eigenschaften und gleichzeitig eine für praktische Anwendungen ausreichende Lichtechtheit aufweisen.

Ausgehend vom Stand der Technik lag damit eine der vorliegenden Erfindung zugrunde liegende Aufgabe darin, thermoplastische Polyurethane und Verfahren zur Herstellung von thermoplastischen Polyurethanen bereitzustellen, deren Ausgangsverbindungen hinreichend gut verarbeitbar sind und die zum einen eine hohe Transparenz und Lichtechtheit und zum anderen eine sehr gute mechanische Festigkeit und Härte aufweisen.

Erfindungsgemäß wird diese Aufgabe gelöst durch ein thermoplastisches Polyurethan erhältlich oder erhalten durch Umsetzung von mindestens den Komponenten (i) bis (iii):

(i) mindestens ein aliphatisches Diisocyanat;
(ii) mindestens ein Diol mit einem Molekulargewicht Mw < 220 g/mol als Kettenverlängerer; und
(iii) mindestens eine Polyolzusammensetzung,

wobei die Polyolzusammensetzung

- ein Polyol ausgewählt aus der Gruppe bestehend aus Polyetherolen und
- mindestens ein Bisphenol-Derivat umfasst, ausgewählt aus der Gruppe bestehend aus Bisphenol-A-Derivaten mit einem Molekulargewicht Mw > 315 g/mol und Bisphenol-S-Derivaten mit einem Molekulargewicht Mw > 315 g/mol, wobei mindestens eine der OH-Gruppen des Bisphenol-Derivats alkoxyliert ist,

wobei das Polyetherol ausgewählt ist aus der Gruppe bestehend aus Polyethyleneglykolen, Polypropylenglykolen und Polytetrahydrofuranen, wobei der Kettenverlängerer und das Bisphenol-Derivat in einem molaren Verhältnis von 3:1 bis 1:1 eingesetzt werden.

Überraschenderweise wurde gefunden, dass die Einbringung von Bisphenol-Derivaten in die Polymerstruktur trotz ihrer aromatischen Struktur die Lichtechtheit von aliphatischen thermoplastischen Polyurethanen nicht nur nicht verschlechtert. Vielmehr lässt sich damit ein hartes thermoplastisches Polyurethan höchster Transparenz und Lichtechtheit herstellen. Überraschender Weise kommt es auch bei einer langen UV-Bestrahlung und thermischer Belastung nicht zu einer Verfärbung.

Es wurde gefunden, dass transparente thermoplastische Polyurethane erhalten werden können, wenn zur Herstellung neben mindestens einem Polyisocyanat und mindestens einem Kettenverlängerer mindestens eine Polyolzusammensetzung eingesetzt wird, die ein Polyol ausgewählt aus der Gruppe bestehend aus Polyetherolen und mindestens ein Bisphenol-Derivat umfasst, ausgewählt aus der Gruppe bestehend aus Bisphenol-A-Derivaten mit einem Molekulargewicht Mw > 315 g/mol und Bisphenol-S-Derivaten mit einem Molekulargewicht Mw > 315 g/mol, wobei mindestens eine der OH-Gruppen des Bisphenol-Derivats alkoxyliert ist.

Durch die erfindungsgemäß eingesetzte Polyolzusammensetzung, d.h. die Kombination eines Polyols ausgewählt aus der Gruppe bestehend aus Polyetherolen und dem oben beschriebenen mindestens einen Bisphenol-Derivats werden thermoplastische Polyurethane erhalten, die zum einen gute mechanische Eigenschaften aufweisen, zum anderen hohe Transparenz und Lichtechtheit.

Es ist im Rahmen der vorliegenden Erfindung wesentlich, dass mindestens ein Kettenverlängerer und die Polyolzusammensetzung wie zuvor beschrieben eingesetzt werden. Dabei kann die Polyolzusammensetzung neben dem mindestens einen Bisphenol-Derivat weitere Polyole enthalten. Dementsprechend können im Rahmen der vorliegenden Erfindung auch mindestens ein Kettenverlängerer und eine Polyolzusammensetzung umfassend mindestens ein Bisphenol-A-Derivaten wie zuvor beschrieben und mindestens ein weiteres Polyol eingesetzt werden.

Erfindungsgemäß kann ein Kettenverlängerer eingesetzt werden, es können jedoch auch Mischungen verschiedener Kettenverlängerer eingesetzt werden.

Als Kettenverlängerer können bevorzugt aliphatische, araliphatische, aromatische und/oder cycloaliphatische Diole mit einem Molekulargewicht von 50 g/mol bis 220 g/mol eingesetzt werden. Bevorzugt sind Alkandiole mit 2 bis 10 C-Atomen im Alkylenrest, insbesondere Di-, Tri-, Tetra-, Penta-, Hexa-, Hepta-, Okta-, Nona- und/oder Dekaalkylenglykole. Für die vorliegende Erfindung sind besonders bevorzugt 1,2-Ethylenglykol, 1,3-Propandiol, 1,4-Butandiol, 1,6-Hexandiol.

Der Kettenverlängerer ist ein Diol mit einem Molekulargewicht Mw < 220 g/mol. Erfindungsgemäß ist es möglich, dass lediglich ein Diol mit einem Molekulargewicht Mw < 220 g/mol zur Herstellung des transparenten, thermoplastischen Polyurethans eingesetzt wird.

Gemäß einer weiteren Ausführungsform werden mehr als ein Diol als Kettenverlängerer eingesetzt. Es können somit auch Mischungen von Kettenverlängerern eingesetzt werden, wobei mindestens ein Diol ein Molekulargewicht Mw < 220 g/mol aufweist. Werden mehr als ein Kettenverlängerer eingesetzt, so kann das zweite oder weitere Kettenverlängerer auch ein Molekulargewicht $\geq$ 220 g/mol aufweisen.

Gemäß einer weiteren Ausführungsform ist der Kettenverlängerer ausgewählt aus der Gruppe bestehend aus 1,4-Butandiol und 1,6-Hexandiol.

Der Kettenverlängerer, das Diol mit einem Molekulargewicht Mw < 220 g/mol, wird in einem molaren Verhältnis im Bereich von 3:1 bis 1:1 zu dem Bisphenol-Derivat eingesetzt. Bevorzugt werden der Kettenverlängerer und das Bisphenol-Derivat in einem molaren Verhältnis im Bereich von 3:1 bis 2:1 eingesetzt.

Erfindungsgemäß umfasst die Polyolzusammensetzung mindestens ein Bisphenol-Derivat, ausgewählt aus der Gruppe bestehend aus Bisphenol-A-Derivaten mit einem Molekulargewicht Mw > 315 g/mol und Bisphenol-S-Derivaten mit einem Molekulargewicht Mw > 315 g/mol, wobei mindestens eine der OH-Gruppen des Bisphenol-Derivats alkoxyliert ist. Erfindungsgemäß ist es auch möglich, dass die Polyolzusammensetzung zwei oder mehr Bisphenol Derivate, ausgewählt aus der Gruppe bestehend aus Bisphenol-A-Derivaten mit einem Molekulargewicht Mw > 315 g/mol und Bisphenol-S-Derivaten mit einem Molekulargewicht Mw > 315 g/mol, wobei mindestens eine der OH-Gruppen des Bisphenol-Derivats alkoxyliert ist, umfasst.

Gemäß einer bevorzugten Ausführungsform der vorliegenden Erfindung weist das mindestens eine Bisphenol-Derivat nur primäre OH-Gruppen aus. Somit weist gemäß dieser Ausführungsform das mindestens eine Bisphenol-Derivat keine phenolischen oder aromatischen OH-Gruppen auf.

Erfindungsgemäß ist mindestens eine der OH-Gruppen des Bisphenol-Derivats alkoxyliert. Gemäß einer bevorzugten Ausführungsform der vorliegenden Erfindung sind beide OH-Gruppen des Bisphenol-Derivats alkoxyliert. Es hat sich überraschenderweise gezeigt, dass durch die erfindungsgemäße Kombination von Polyolen bzw. den Einsatz von Bisphenol-Derivaten, bei denen mindestens eine der OH-Gruppen alkoxyliert ist, bevorzugt beide OH-Gruppen alkoxyliert sind, und bei denen bevorzugt somit keine aromatischen OH-Gruppen vorliegen, hervorragende mechanischen Eigenschaften des resultierenden thermoplastischen Polyurethans erhalten werden.

Gemäß einer weiteren Ausführungsform der vorliegenden Erfindung sind beide OH-Gruppen des Bisphenol-Derivats alkoxyliert. Alkoxyliert gemäß der vorliegenden Erfindung bedeutet, dass in die chemische Bindung zwischen aromatischen Ring des Bisphenol-Derivats und der Hydroxylgruppe (-OH) eine Alkoxylgruppe (-O-R- mit R = Alkylenerest) eingebaut wird. Gemäß einer Ausführungsform sind dabei die beiden OH-Gruppen am Bisphenol-Derivat mit derselben Alkoxylgruppe alkoxyliert. Dabei ist es beispielsweise möglich, dass die OH-Gruppen mit Ethoxyl- ($-O-C_2H_4-$), Propoxyl- ($-O-C_3H_6-$), Butoxyl- ($-O-C_4H_8-$), Pentoxyl- ($-O-C_5H_{10}-$) oder Hexoxylgruppen ($-O-C_6H_{12}-$) alkoxyliert sind.

Gemäß einer weiteren Ausführungsform der vorliegenden Erfindung sind beide OH-Gruppen des Bisphenol-Derivats mit unterschiedlichen Alkoxygruppen (-O-R- mit R = Alkylenerest) alkoxyliert. Gemäß einer bevorzugten Ausführungsform sind die beiden OH-Gruppen des Bisphenol-Derivats mit zwei unterschiedlichen Resten ausgewählt aus der Gruppe bestehend aus Ethoxyl- ($-O-C_2H_4-$), Propoxyl- ($-O-C_3H_6-$), Butoxyl- ($-O-C_4H_8-$), Pentoxyl- ($-O-C_5H_{10}-$) oder Hexoxylrest ($-O-C_6H_{12}-$) alkoxyliert.

Erfindungsgemäß kann der Alkoxylrest eine oder auch mehrere Alkoy-Gruppen aufweisen. Gemäß einer bevorzugten Ausführungsform der vorliegenden Erfindung wird ein Bisphenol-Derivat eingesetzt, wobei mindestens eine der OH-Gruppen des Bisphenol-Derivats alkoxyliert ist, und der mindestens eine Alkoxylrest ein Molekulargewicht von > 40 g/mol aufweist, bevorzugt > 60 g/mol, weiter bevorzugt > 120 g/mol, insbesondere > 180 g/mol, beispielsweise > 250 g/mol oder auch > 300 g/mol.

Gemäß einer weiter bevorzugten Ausführungsform der vorliegenden Erfindung wird ein Bisphenol-Derivat eingesetzt, wobei beide OH-Gruppen des Bisphenol-Derivats alkoxyliert sind, und die zwei Alkoxylreste gleich oder unterschiedlich sein können und unabhängig voneinander ein Molekulargewicht von > 40 g/mol, bevorzugt > 60 g/mol, weiter bevorzugt > 120 g/mol, insbesondere > 180 g/mol, beispielsweise > 250 g/mol oder auch > 300 g/mol aufweisen.

Erfindungsgemäß ist das Bisphenol-Derivat ausgewählt aus der Gruppe bestehend aus Bisphenol-A-Derivaten mit einem Molekulargewicht Mw > 315 g/mol und Bisphenol-S-Derivaten mit einem Molekulargewicht Mw > 315 g/mol, wobei mindestens eine der OH-Gruppen des Bisphenol-Derivats alkoxyliert ist. Weiter bevorzugt sind Bisphenol-A-Derivate oder Bisphenol-S-Derivate mit einem Molekulargewicht Mw > 400 g/mol weiter bevorzugt einem Molekulargewicht Mw > 450 g/mol, insbesondere einem Molekulargewicht Mw > 500 g/mol, besonders bevorzugt einem Molekulargewicht Mw > 550 g/mol, beispielsweise einem Molekulargewicht Mw > 600 g/mol.

Gemäß einer Ausführungsform betrifft die vorliegende Erfindung ein wie zuvor beschriebenes thermoplastisches Polyurethan, wobei das mindestens eine Bisphenol-Derivat nur primäre OH-Gruppen aufweist.

Dabei betrifft die vorliegende Erfindung gemäß einer weiteren Ausführungsform ein wie zuvor beschriebenes thermoplastisches Polyurethan, wobei das mindestens eine Bisphenol-Derivat die folgende allgemeine Formel (I) aufweist:

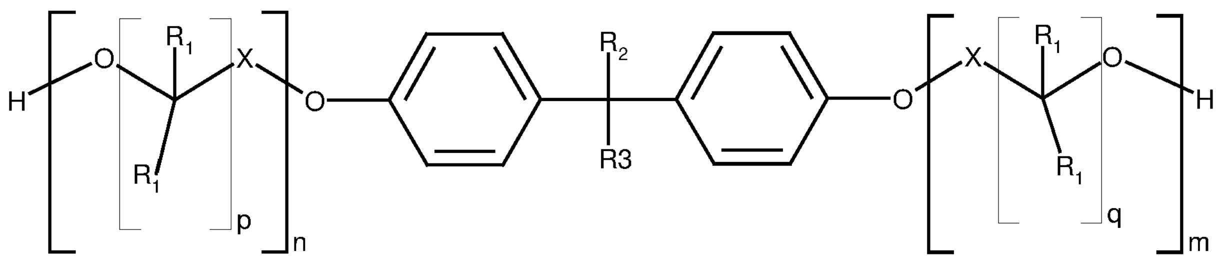

(I)

wobei

R1 jeweils unabhängig voneinander eine Methylgruppe oder H ist,
R2 und R3 eine Methylgruppe sind oder
R2 -C- R3 zusammen O=S=O sind,
X eine $-C(R1)_2-$, $-C(R1)_2-C(R1)_2-$ oder $-C(R1)_2-C(R1)_2-C(R1)_2-$ -Gruppe darstellt,

p und q unabhängig voneinander eine ganze Zahl von 1 bis 4 sind, und
n und m unabhängig voneinander eine ganze Zahl > 0 sind.

Demgemäß kann das Bisphenol-Derivat die Formel (Ia), wobei R2 und R3 eine Methylgruppe sind oder (Ib), wobei R2 -C- R3 zusammen O=S=O sind, aufweisen:

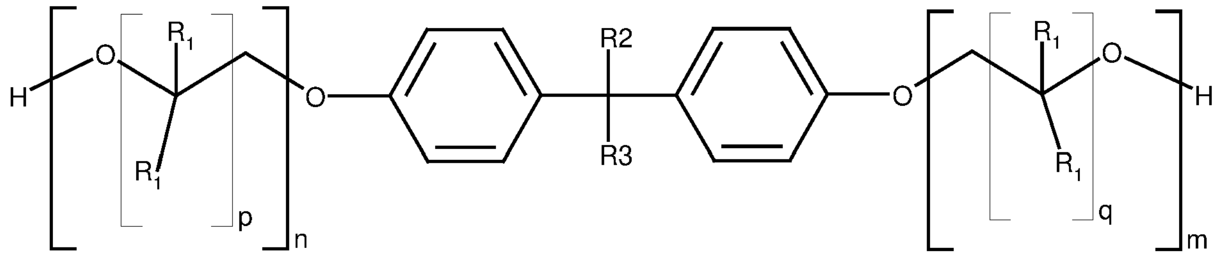

(Ia)

wobei

R1 jeweils unabhängig voneinander eine Methylgruppe oder H ist,
R2 und R3 eine Methylgruppe sind,
X eine $-C(R1)_2-$, $-C(R1)_2-C(R1)_2-$ oder $-C(R1)_2-C(R1)_2-C(R1)_2-$ -Gruppe darstellt, p und q unabhängig voneinander eine ganze Zahl von 1 bis 4 sind, und n und m unabhängig voneinander eine ganze Zahl > 0 sind;

oder

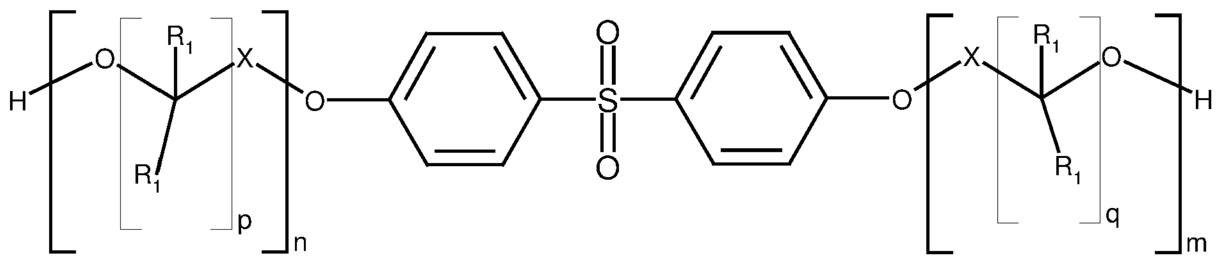

(Ib)

wobei

R1 jeweils unabhängig voneinander eine Methylgruppe oder H ist,
R2 -C- R3 zusammen O=S=O sind,
X eine $-C(R1)_2-$, $-C(R1)_2-C(R1)_2-$ oder $-C(R1)_2-C(R1)_2-C(R1)_2-$ -Gruppe darstellt,
p und q unabhängig voneinander eine ganze Zahl von 1 bis 4 sind, und
n und m unabhängig voneinander eine ganze Zahl > 0 sind.

Gemäß einer bevorzugten Ausführungsform ist der Alkoxylrest jeweils ein Ethoxylrest, d.h. gemäß einer bevorzugten Ausführungsform weist das mindestens eine Bisphenol-Derivat die allgemeine Formel (II) auf:

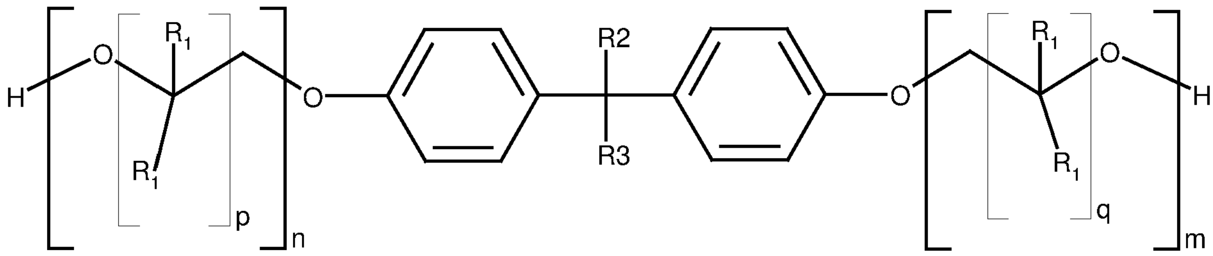

(II)

wobei

R1 jeweils unabhängig voneinander eine Methylgruppe oder H ist,
R2 und R3 eine Methylgruppe sind oder
R2 -C- R3 zusammen O=S=O sind,
p und q unabhängig voneinander eine ganze Zahl von 1 bis 4 sind, und
n und m unabhängig voneinander eine ganze Zahl > 0 sind.

Gemäß einer bevorzugten Ausführungsform ist R1 Wasserstoff, d.h. die Verbindung der Formel (I) bzw. (la), (Ib) oder (II) weist vorzugsweise endständig primäre Alkoholgruppen auf.

Neben dem mindestens einen Bisphenol-Derivat kann die Polyolzusammensetzung erfindungsgemäß weitere Polyole umfassen.

Polyole sind dem Fachmann grundsätzlich bekannt und beispielsweise beschrieben im "Kunststoffhandbuch, Band 7, Polyurethane", Carl Hanser Verlag, 3. Auflage 1993, Kapitel 3.1. Besonders bevorzugt werden Polyesterole oder Polyetherole als Polyole eingesetzt. Ebenso können Polycarbonate eingesetzt werden. Auch Copolymere können im Rahmen der vorliegenden Erfindung eingesetzt werden. Das zahlenmittlere Molekulargewicht der erfindungsgemäß eingesetzten Polyole liegen vorzugsweise zwischen $0,5x10^3$g/mol und $8x10^3$ g/mol, bevorzugt zwischen 0,6 $x10^3$ g/mol und 5 $x10^3$ g/mol, insbesondere zwischen 0,8 $x10^3$ g/mol und 3 $x10^3$ g/mol.

Erfindungsgemäß umfasst die Polyolzusammensetzung ein Polyol ausgewählt aus der Gruppe bestehend aus Polyetherolen , wobei das Polyetehrol ausgewählt ist aus der Gruppe bestehend aus Polyethyleneglykolen, Polypropylenglykolen und Polytetrahydrofuranen.

Gemäß einer besonders bevorzugten Ausführungsform ist das Polyol ein Polytetrahydrofuran mit einem Molekulargewicht im Mn Bereich von 600 g/mol bis 2500 g/mol.

Demgemäß betrifft die vorliegende Erfindung gemäß einer weiteren Ausführungsform ein wie zuvor beschriebenes thermoplastisches Polyurethan, wobei die Polyolzusammensetzung ein Polyol ausgewählt aus der Gruppe bestehend aus Polytetrahydrofuranen mit einem Molekulargewicht Mn im Bereich von 600 g/mol bis 2500 g/mol umfasst.

Bevorzugt haben die eingesetzten Polyole eine mittlerer Funktionalität zwischen 1,8 und 2,3, bevorzugt zwischen 1,9 und 2,2, insbesondere 2. Bevorzugt weisen die erfindungsgemäß eingesetzten Polyole nur primäre Hydroxylgruppen auf.

Erfindungsgemäß kann das Polyol in reiner Form oder in Form einer Zusammensetzung enthaltend das Polyol und mindestens ein Lösungsmittel eingesetzt werden. Geeignete Lösungsmittel sind dem Fachmann an sich bekannt.

Das zusätzliche Polyol wird vorzugsweise in einem molaren Verhältnis im Bereich von 40:1 bis 1:10 zu dem Bisphenol-Derivat eingesetzt wird. In weiter bevorzugten Ausführungsformen werden das Polyol und das Bisphenol-Derivat in einem molaren Verhältnis im Bereich von 30:1 bis 1:9 eingesetzt, weiter bevorzugt im Bereich von 20:1 bis 1:8,5, insbesondere im Bereich von 15:1 bis 1:5, besonders bevorzugt im Bereich von 10:1 bis 1:2, oder auch im Bereich von 7:1 bis 1:1,6.

Erfindungsgemäß kann das Polyol ausgewählt aus der Gruppe bestehend aus Polyetherolen in einem molaren Verhältnis im Bereich von 40:1 bis 1:10 zu dem Bisphenol-Derivat eingesetzt werden. In weiter bevorzugten Ausführungsformen werden das Polyol ausgewählt aus der Gruppe bestehend aus Polyetherolen und das Bisphenol-Derivat in einem molaren Verhältnis im Bereich von 30:1 bis 1:9 eingesetzt, weiter bevorzugt im Bereich von 20:1 bis 1:8,5, insbesondere im Bereich von 15:1 bis 1:5, besonders bevorzugt im Bereich von 10:1 bis 1:2, oder auch im Bereich von 7:1 bis 1:1,6.

Beispielsweise können das Polyol und das Bisphenol-Derivat in einem Verhältnis im Bereich von 40:1 bis 10:1, insbesondere im Bereich von 30:1 bis 15:1 eingesetzt werden. Ebenso ist es möglich, dass das Polyol und das Bisphenol-Derivat in einem Verhältnis im Bereich von 1:10 bis 1:9 eingesetzt werden.

Erfindungsgemäß wird mindestens ein aliphatisches Diisocyanat eingesetzt. Erfindungsgemäß können auch Mischungen aus zwei oder mehr Polyisocyanaten eingesetzt werden.

Des Weiteren können im Rahmen der vorliegenden Erfindung vorreagierte Prepolymere als Isocyanatkomponenten eingesetzt werden, bei denen ein Teil der OH-Komponenten in einem vorgelagerten Reaktionsschritt mit einem Isocyanat zur Reaktion gebracht werden. Diese Prepolymere werden in einem nachfolgenden Schritt, der eigentlichen Polymerreaktion, mit den restlichen OH-Komponenten zur Reaktion gebracht und bilden dann das thermoplastische Polyurethan. Die Verwendung von Prepolymeren bietet die Möglichkeit, auch OH-Komponenten mit sekundären Alkoholgruppen zu verwenden.

Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methylpentamethylen-1,5-diisocyanat, 2-Ethyltetramethylen-1,4-diisocyanat, Hexamethylen-1,6-diisocyanat (HDI), Pentamethylen-1,5-diisocyanat, Butylen-1,4-diisocyanat, Trime-thylhexamethylen-1,6-diisocyanat, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder 1-Methyl-2,6-cyclohexandiisocyanat, 4,4'-, 2,4'-und/oder 2,2'-Methylendicyclohexyldiisocyanat (H12MDI).

Bevorzugte aliphatische Polyisocyanate sind Hexamethylen-1,6-diisocyanat (HDI), 1-Isocyanato-3,3,5-trimethyl-5-isocyanatomethyl-cyclohexan und 4,4'-, 2,4'- und/oder 2,2'-Methylendicyclohexyldiisocyanat (H12MDI); insbesondere bevorzugt sind 4,4'-, 2,4'- und/oder 2,2'-Methylendicyclohexyldiisocyanat (H12MDI) und 1-Isocyanato-3,3,5-trimethyl-5-isocyanatomethyl-cyclohexan oder Mischungen davon.

Demgemäß betrifft die vorliegende Erfindung gemäß einer weiteren Ausführungsform ein wie zuvor beschriebenes thermoplastisches Polyurethan, wobei das Polyisocyanat ausgewählt ist aus der Gruppe bestehend aus 4,4'-, 2,4'- und/oder 2,2'-Methylendicyclohexyldiisocyanat (H12MDI), Hexamethylendiisocyanat (HDI) und 1-Isocyanato-3,3,5-trimethyl-5-isocyanatomethyl-cyclohexan oder Mischungen davon.

Erfindungsgemäß kann das Polyisocyanat in reiner Form oder in Form einer Zusammensetzung enthaltend das Polyisocyanat und mindestens ein Lösungsmittel eingesetzt werden. Geeignete Lösungsmittel sind dem Fachmann bekannt. Geeignet sind beispielsweise nicht reaktive Lösungsmittel wie Ethylacetat, Methylethylketon und Kohlenwasserstoffe.

Erfindungsgemäß können bei der Umsetzung von dem mindestens einen aliphatischen Diisocyanat; dem mindestens einen Diol mit einem Molekulargewicht Mw < 220 g/mol als Kettenverlängerer; und der mindestens einen Polyolzusammensetzung weitere Einsatzstoffe zugesetzt werden, beispielsweise Katalysatoren oder Hilfs- und Zusatzstoffe.

Geeignete Hilfs- und Zusatzstoffe sind dem Fachmann an sich bekannt. Genannt seien beispielsweise oberflächenaktive Substanzen, Flammschutzmittel, Keimbildungsmittel, Oxidationsstabilisatoren, Antioxidatien, Gleit- und Entformungshilfen, Farbstoffe und Pigmente, Stabilisatoren, z. B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S103-113) entnommen werden.

Geeignete Katalysatoren sind ebenfalls grundsätzlich aus dem Stand der Technik bekannt. Geeignete Katalysatoren sind beispielsweise organische Metallverbindungen ausgewählt aus der Gruppe bestehend aus Zinn-, Titan-, Zirkonium-, Hafnium-, Bismut-, Zink-, Aluminium- und Eisenorganylen, wie beispielsweise Zinnorganylverbindungen, bevorzugt Zinndialkyle wie Zinn-II-isooctoat, Zinndioctoat, Dimethylzinn oder Diethylzinn, oder Zinnorganylverbindungen aliphatischer Carbonsäuren, bevorzugt Zinndiacetat, Zinndilaurat, Dibutylzinndiacetat, Dibutylzinndilaurat, Titansäureester, Bismuthverbindungen, wie Bismuthalkylverbindungen, bevorzugt Bismuthneodecanoat oder ähnliche, oder Eisenverbindungen, bevorzugt Eisen-(MI)-acetylacetonat.

Gemäß einer bevorzugten Ausführungsform werden die Katalysatoren ausgewählt aus Zinnverbindungen und Bismuthverbindungen, weiter bevorzugt Zinnalkylverbindungen oder Bismuthalkylverbindungen. Besonders geeignet sind die Zinn-II-isooctoat und Bismuthneodecanoat.

Die Katalysatoren werden üblicherweise in Mengen von 3 ppm bis 2000 ppm, bevorzugt 10 ppm bis 1000 ppm, weiter bevorzugt 20 ppm bis 500 ppm und am meisten bevorzugt von 30 pmm bis 300 ppm eingesetzt.

Gemäß einem weiteren Aspekt betrifft die vorliegende Erfindung ein Verfahren zur Herstellung eines thermoplastischen Polyurethans umfassend die Umsetzung

(i) mindestens eines aliphatischen Diisocyanats;
(ii) mindestens eines Diols mit einem Molekulargewicht Mw < 220 g/mol als Kettenverlängerer; und
(iii) mindestens einer Polyolzusammensetzung,

wobei die Polyolzusammensetzung ein Polyol ausgewählt aus der Gruppe bestehend aus Polyetherolen und mindestens ein Bisphenol-Derivat umfasst, ausgewählt aus der Gruppe bestehend aus Bisphenol-A-Derivaten mit einem Molekulargewicht Mw > 315 g/mol und Bisphenol-S-Derivaten mit einem Molekulargewicht Mw > 315 g/mol, wobei mindestens eine der OH-Gruppen des Bisphenol-Derivats alkoxyliert ist,
wobei das Polyetherol ausgewählt ist aus der Gruppe bestehend aus Polyethyleneglykolen, Polypropylenglykolen und Polytetrahydrofuranen, wobei der Kettenverlängerer und das Bisphenol-Derivat in einem molaren Verhältnis von 3:1 bis 1:1 eingesetzt werden.

Erfindungsgemäß bevorzugte Einsatzstoffe sind zuvor beschrieben.

Weiter betrifft die vorliegende Erfindung gemäß einer weiteren Ausführungsform ein wie zuvor beschriebenes Verfahren zur Herstellung eines thermoplastischen Polyurethans, wobei das mindestens eine Bisphenol-Derivat die folgende allgemeine Formel (I) aufweist:

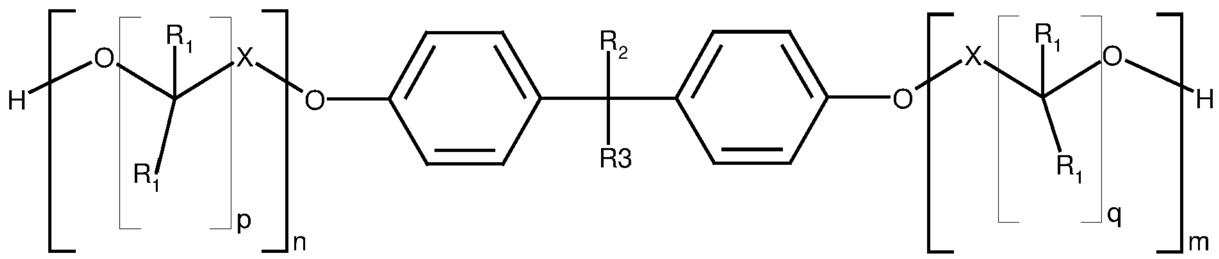

(I)

wobei

R1 jeweils unabhängig voneinander eine Methylgruppe oder H ist,
R2 und R3 eine Methylgruppe sind oder
R2 -C- R3 zusammen O=S=O sind,
X eine $-C(R1)_2-$, $-C(R1)_2-C(R1)_2-$ oder $-C(R1)_2-C(R1)_2-C(R1)_2-$ -Gruppe darstellt,
p und q unabhängig voneinander eine ganze Zahl von 1 bis 4 sind, und
n und m unabhängig voneinander eine ganze Zahl > 0 sind.

Die vorliegende Erfindung betrifft somit auch ein wie zuvor beschriebenes Verfahren zur Herstellung eines thermoplastischen Polyurethans, wobei die Polyolzusammensetzung ein Polyol ausgewählt aus der Gruppe bestehend aus Polyetherolen umfasst, wobei das Polyetherol ausgewählt ist aus der Gruppe bestehend aus Polyethyleneglykolen, Polypropylenglykolen und Polytetrahydrofuranen.

Bevorzugte Einsatzstoffe sind die zuvor beschriebenen. Auch geeignete Mengenverhältnisse sind zuvor beschrieben.

Das Verfahren kann prinzipiell unter an sich bekannten Reaktionsbedingungen durchgeführt werden.

Gemäß einer bevorzugten Ausführungsform wird das Verfahren unter erhöhten Temperaturen als Raumtemperatur durchgeführt, weiter bevorzugt im Bereich zwischen 50 °C und 200 °C, besonders bevorzugt im Bereich von 65 °C und 150 °C, insbesondere im Bereich von 75 °C und 120 °C.

Das Erwärmen kann erfindungsgemäß auf jede dem Fachmann bekannte geeignete Art erfolgen. Vorzugsweise durch elektrisches Beheizen, Beheizen über erhitztes Öl oder Wasser, Induktionsfelder, Warmluft oder IR-Strahlung.

Die erfindungsgemäßen thermoplastischen Polyurethane bzw. die nach einem erfindungsgemäßen Verfahren erhaltenen Polyurethane weisen bei guten mechanischen Eigenschaften eine hohe Transparenz auf. Überraschenderweise kommt es auch bei einer langen UV-Bestrahlung und thermischer Belastung nicht zu einer Verfärbung.

Erfindungsgemäße thermoplastische Polyurethane bzw. die nach einem erfindungsgemäßen Verfahren erhaltenen Polyurethane weisen vorzugsweise eine Transmission bei 450 nm von größer 85 % bei einer Schichtdicke von 2 mm auf. Die Transmission bzw. Opazität werden dabei im Rahmen der vorliegenden Erfindung einmal mit einer Lichtfalle als Hintergrund und einmal mit einer weißen Kachel als Hintergrund in Reflektion unter Ausschluss des Glanzes mit einem Farbmessgerät gemessen. Die Helligkeitswerte (L-Wert nach DIN 6174) werden ins Verhältnis gesetzt und als Opazität in % angegeben.

Die Transmission bzw. Opazität wurde einmal mit einer Lichtfalle als Hintergrund und einmal mit einer weißen Kachel als Hintergrund in Reflektion unter Ausschluss des Glanzes mit einem Farbmessgerät gemessen. Die Helligkeitswerte (L-Wert nach DIN 6174) werden ins Verhältnis gesetzt und als Opazität in % angegeben. Verwendet wurde ein Farbmessgerät "UltraScan" der Firma HunterLab. Das Farbmessgerät wird bei Erreichen der Betriebstemperatur standardisiert, im Allgemeinen 30 Minuten, und unter folgenden Parametern gefahren:

| | |
|---|---|
| Mode: | RSEX (Reflexion Specular Excluded), Reflexion ohne Glanz, unter Öffnung der Glanzfalle |
| Area View: | large |
| Port Size: | 25,4 |
| UV-Filter: | out |

Die Berechnung der Gesamtopazität erfolgt nach folgender Formel:

$$\text{Opazität} = (\text{L-Wert-Schwarz}/\text{L-Wert-Weiß}) \times 100\ \%$$

Demnach bedeutet ein Opazitätswert von 0 % völlige Transparenz (100 %) der Probe und ein Wert von 100 % Opazität eine völlige Undurchsichtigkeit (Transparenz = 0 %).

Weiter ist der Brechungsindex der erfindungsgemäßen thermoplastischen Polyurethane bzw. der nach einem erfindungsgemäßen Verfahren erhaltenen Polyurethane größer als 1,52, bestimmt gemäß EN ISO 489:1999.

Darüber hinaus ist vorzugsweise das erfindungsgemäße thermoplastische Polyurethan bzw. ein nach einem erfindungsgemäßen Verfahren erhaltenes Polyurethan dadurch gekennzeichnet, dass das Speichermodul innerhalb von 40 °C auf 5 % des Ausgangswertes fällt gemessen nach DIN ISO11359.

Ein weiterer Aspekt der vorliegenden Erfindung betrifft die Verwendung eines transparenten thermoplastischen Polyurethans gemäß der vorliegenden Erfindung oder eines thermoplastischen Polyurethans erhältlich nach einem Verfahren gemäß der vorliegenden Erfindung zur Herstellung von Extrusionsprodukten, Folien und Formkörpern.

Gemäß einer weiteren Ausführungsform betrifft die vorliegende Erfindung die Verwendung eines wie zuvor beschriebenen thermoplastischen Polyurethans oder eines thermoplastischen Polyurethans erhältlich oder erhalten nach einem die Verwendung eines thermoplastischen Polyurethans wie zuvor beschriebenen Verfahren zur Herstellung von Extrusionsprodukten, Folien und Formkörpern.

Gemäß einer bevorzugten Ausführungsform umfasst die Verwendung eines transparenten thermoplastischen Polyurethans gemäß der vorliegenden Erfindung oder eines thermoplastischen Polyurethans erhältlich nach einem Verfahren gemäß der vorliegenden Erfindung die Herstellung eines Formkörpers, der eine Linse, eine Scheibe, eine Displayabdeckung oder Abdeckung für einen Scheinwerfer oder eine Leuchte ist.

Demgemäß betrifft die vorliegende Erfindung gemäß einer weiteren Ausführungsform die Verwendung eines thermoplastischen Polyurethans wie zuvor beschrieben, wobei der Formkörper eine Linse, eine Scheibe, eine Displayabdeckung oder Abdeckung für einen Scheinwerfer oder eine Leuchte ist.

Ferner ist die Verwendung eines thermoplastischen Polyurethans gemäß der vorliegenden Erfindung als Glasersatzmaterial, thermoverformbares Material, Konstruktionsmaterial, Klebstoff, insbesondere Heißklebstoff, medizinisches Bedarfsmaterial oder als optischer Datenträger bevorzugt.

Besonders bevorzugt ist die Verwendung eines thermoplastischen Polyurethans gemäß der vorliegenden Erfindung als Glasersatzmaterial, insbesondere in Lichtleitern, lichtleitenden Folien, Linsen, Fresnel-Linsen, optischen Gläsern, Brillengläsern, Sicherheitsbrillengläser, Scheinwerfergläsern, Lichtabdeckungen, insbesondere bei Straßenlaternen, Rückstrahlern, Automobilinnenbeleuchtungsgläsern, Motorradvisieren, Abdeckgläsern, Gehäuseabdeckungen, insbesondere für automobile Anwendungen, Schutzscheiben, Handydisplays, Flaschen und sonstigen Behältnissen.

Ebenfalls bevorzugt ist die Verwendung eines thermoplastischen Polyurethans gemäß der vorliegenden Erfindung als optischer Datenträger, insbesondere für CDs, DVDs und Blu-Ray-Kompaktdisketten, sowie für weitere optische Anwendungen, zum Beispiel unter Wasser.

Demgemäß betrifft die vorliegende Erfindung gemäß einer weiteren Ausführungsform die Verwendung eines thermoplastischen Polyurethans wie zuvor beschrieben, wobei die Produkte transparente Körper zur Lichtleitung, zur Beleuchtung oder zur Detektion von Licht sind.

Weiter bevorzugt ist die Verwendung eines thermoplastischen Polyurethans gemäß der vorliegenden Erfindung in der Medizin, insbesondere für medizinische Bedarfsstoffe und als Material für Implantate.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahren/Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst auch wenn diese Kombination nicht ausdrücklich erwähnt wird.

Im Folgenden sind beispielhafte Ausführungsformen der vorliegenden Erfindung aufgeführt, wobei diese die

vorliegende Erfindung nicht einschränken. Insbesondere umfasst die vorliegende Erfindung auch solche Ausführungsformen, die sich aus den im Folgenden angegebenen Rückbezügen und damit Kombinationen ergeben.

Die nachfolgenden Beispiele dienen der Veranschaulichung der Erfindung, sind aber in keiner Weise einschränkend hinsichtlich des Gegenstands der vorliegenden Erfindung.

BEISPIELE

Folgende Einsatzstoffe wurden eingesetzt:

Polyol 1: Polyetherpolyol mit einer OH-Zahl von 114,2 und ausschließlich Primären OH-Gruppen,
Polyol 2: Bisphenol A- gestartetes Polyetherpolyol mit einer OH-Zahl von 313 und ausschließlich primären OH-Gruppen
Polyol 3: Bisphenol A- gestartetes Polyetherpolyol mit einer OH-Zahl von 239 und ausschließlich primären OH-Gruppen
Polyol 4: Adipinsäure-DEG-TMP gestartetes Polyesterpolyol mit MW 2390 g/mol und einer OH-Zahl von 61 g/mol
Polyol 5: Phtalsäureanhydrid-DEG gestartetes Polyesterpolyol, mit MW 356 und einer OH-Zahl von 315 g/mol
Polyol 6: Aromatisches Polyesterpolyol mit MW 468 g/mol und einer OH Zahl von 240 g/mol

Isocyanat: aliphatisches Isocyanat (Zusammensetzung: 100 % 4,4' Methylendicyclohexyl-diisocyanat)
KV: 1,4- Butandiol
Katalysator1: Bismuth- Neodecanoat
Katalysator 2: Zinn-II-isooctoat

BEISPIELE

Die Polyole wurden bei 80 °C in einem Behälter vorgelegt und mit den Komponenten gemäß Tabelle 1 unter starkem Rühren vermischt. Die Reaktionsmischung erhitzte sich auf über 110 °C und wurde dann auf einen beheizten, teflonbeschichteten Tisch ausgegossen. Die erhaltene Gießschwarte wurde 15 Stunden bei 80 °C getempert, anschließend granuliert und im Spritzguss verarbeitet.

Die Polyole 1, 2, 3, 4, 5 und 6 wurden gemäß folgender Tabelle 1 mit Kettenverlängerer KV und dem Isocyanat umgesetzt:

Tabelle1

| | **Beispiel 1 (Gew.-Tle) Vergleich** | **Beispiel 2 (Gew.-Tle)** | **Beispiel 3 (Gew.-Tle)** | **Beispiel 4 (Gew.-Tle) Vergleich** | **Beispiel 5 (Gew.-Tle)** | **Beispiel 6 (Gew.-Tle)** | **Beispiel 7 (Gew.-Tle) Vergleich** |
|---|---|---|---|---|---|---|---|
| **Polyol 1** | 39,61 | 32,51 | 22,54 | - | 31,60 | 21,00 | - |
| **Polyol 2** | - | 5,12 | 12,42 | 28,93 | - | - | - |
| **Polyol 3** | - | - | - | - | 6,53 | 15,18 | 32,32 |
| **Isocyanat** | 47,63 | 49,61 | 52,28 | 58,31 | 49,11 | 51,06 | 54,93 |
| **KV** | 12,76 | 12,76 | 12,76 | 12,76 | 12,76 | 12,76 | 12,76 |
| **Katalysator** | 70ppm | 70ppm | 70ppm | 70ppm | 70ppm | 70ppm | 70ppm |

| | Beispiel 8 (Gew.-Tle) | Beispiel 9 (Gew.-Tle) | Beispiel 10 (Gew.-Tle) | Beispiel 11 (Gew.-Tle) Vergleich | Beispiel 12 (Gew.-Tle) Vergleich |
|---|---|---|---|---|---|
| **Polyol 1** | 20,23 | 18,59 | 17,19 | - | - |
| **Polyol 3** | 30,35 | 27,89 | 26,48 | 47,36 | 40,2 |
| **Isocyanat** | 42,48 | 45,08 | 47,29 | 45,94 | 50,25 |
| **KV** | 6,93 | 8,44 | 9,73 | 6,69 | 9,55 |
| **Katalysator 2** | 300 ppm | 300 ppm | 300 ppm | 300 ppm | 300 ppm |

| | Beispiel 13 (Gew.-Tle) Vergleich | Beispiel 14 (Gew.-Tle) Vergleich | Beispiel 15 (Gew.-Tle) Vergleich | Beispiel 16 (Gew.-Tle) | Beispiel 17 (Gew.-Tle) Vergleich |
|---|---|---|---|---|---|
| **Polyol 1** | 17,22 | 16,05 | 17,22 | 17,29 | - |
| **Polyol 2** | - | - | - | - | - |
| **Polyol 3** | - | - | - | 25,93 | 40,38 |
| **Polyol 4** | 25,82 | - | - | - | - |
| **Polyol 5** | - | 24,07 | - | - | - |
| **Polyol 6** | - | - | 25,82 | - | - |
| **Isocyanat** | 47,27 | 50,19 | 42,27 | 47,07 | 50,67 |
| **KV** | 9,69 | 9,69 | 9,69 | 9,72 | 8,95 |
| **Katalysator 2** | 200 ppm | 200 ppm | 200 ppm | 200 ppm | 200 ppm |

Die folgenden Eigenschaften der erhaltenen Polyurethane wurden nach den genannten Verfahren bestimmt:

| | |
|---|---|
| Härte: | DIN ISO 7619-1 |
| Zugfestigkeit und Reißdehnung: | DIN 53504 |
| Weiterreißwiderstand : | DIN ISO 34-1, B (b) |
| Vergilbungsindex (Reflexion ohne Glanz): | ASTM E313 |
| Vicat-Temperatur: | DIN EN ISO 306 |
| Abriebmessung: | DIN ISO 4649 |

Es wurden die in Tabelle 2 zusammengefassten Ergebnisse erhalten:

Tabelle 2

| Eigenschaft | Dimension | Bsp.1 | Bsp. 2 | Bsp. 3 | Bsp. 4 | Bsp. 5 | Bsp. 6 | Bsp. 7 |
|---|---|---|---|---|---|---|---|---|
| **Härte** | [Shore D] | 57 | 67 | 80 | 86 | 65 | 75 | 82 |
| **Zugfestigkeit** | [MPa] | 40 | 28 | 52 | 28 | 45 | 40 | 66 |
| **Reißdehnung** | [%] | 400 | 380 | 140 | 3 | 370 | 300 | 10 |
| **Weiterreißwiderstand** | [kN/m] | 119 | 138 | 211 | 87 | 145 | 217 | 105 |
| **Vergilbungsindex** | | 0,9 | 1,0 | 1,1 | 2,7 | 1,2 | 1,2 | 1,3 |
| **Vicat- Temperatur** | 10N/ 120 °C/h [°C] | 44 | 46,9 | 60,1 | 96,8 | 45,2 | 53,8 | 78,2 |
| **Abrieb** | [mm³] | 90 | 243 | 106 | 146 | 176 | 108 | 106 |

n. b. - nicht bestimmbar

| Eigenschaft | Dimension | Bsp. 8 | Bsp. 9 | Bsp. 10 | Bsp. 11 | Bsp. 12 |
|---|---|---|---|---|---|---|
| **Härte** | [Shore D] | 72 | 74 | 77 | 83 | 82 |
| **Zugfestigkeit** | [MPa] | 31 | 35 | 45 | 65 | 70 |
| **Reißdehnung** | [%] | 290 | 250 | 190 | 30 | 30 |
| **Weiterreißwiderstand** | [kN/m] | 142 | 201 | 233 | 43 | 157 |
| **Vergilbungsindex** | | 2,0 | 1,8 | 1,4 | 1,6 | 1,0 |
| **Abrieb** | [mm³] | n. b. | n. b. | n. b. | n. b. | n. b. |

n. b. - nicht bestimmbar

| Eigenschaft | Dimension | Bsp. 13 | Bsp. 14 | Bsp. 15 | Bsp. 16 | Bsp. 17 |
|---|---|---|---|---|---|---|
| **Härte** | [Shore D] | 74 | 78 | 61 | 75 | 82 |
| **Zugfestigkeit** | [MPa] | 29 | 33 | 10 | 42 | 62 |
| **Reißdehnung** | [%] | 100 | 20 | 230 | 250 | 70 |
| **Weiterreißwiderstand** | [kN/m] | 27 | 24 | 73 | 208 | 133 |
| **Vergilbungsindex** | | 3,2 | 2,8 | 3,1 | 2,2 | 1,4 |
| **Abrieb** | [mm³] | n. b. | n. b. | n. b. | 107 | 104 |

n. b. - nicht bestimmbar

Bestimmung der Transmission/Opazität

Die Transmission bzw. Opazität wurde einmal mit einer Lichtfalle als Hintergrund und einmal mit einer weißen Kachel als Hintergrund in Reflektion unter Ausschluss des Glanzes mit einem Farbmessgerät gemessen. Die Helligkeitswerte (L-Wert nach DIN 6174) werden ins Verhältnis gesetzt und als Opazität in % angegeben.

Verwendet wurde ein Farbmessgerät "UltraScan" der Firma HunterLab. Die Proben werden nach AA E-10-132-002 hergestellt. Das Farbmessgerät wird bei Erreichen der Betriebstemperatur standardisiert, im Allgemeinen 30 Minuten, und unter folgenden Parametern gefahren:

| | |
|---|---|
| Mode: | RSEX (Reflexion Specular Excluded), Reflexion ohne Glanz, unter Öffnung der Glanzfalle |
| Area View: | large |

(fortgesetzt)

| | |
|---|---|
| Port Size: | 25,4 |
| UV-Filter: | out |

Die Berechnung der Gesamtopazität erfolgt nach folgender Formel:

$$\text{Opazität} = (\text{L-Wert-Schwarz}/\text{L-Wert-Weiß}) \times 100\ \%$$

Demnach bedeutet ein Opazitätswert von 0 % völlige Transparenz (100 %) der Probe und ein Wert von 100 % Opazität eine völlige Undurchsichtigkeit (Transparenz = 0 %).

## Patentansprüche

1. Thermoplastisches Polyurethan erhältlich oder erhalten durch Umsetzung von mindestens den Komponenten (i) bis (iii):

    (i) mindestens ein aliphatisches Polyisocyanat;
    (ii) mindestens ein Kettenverlängerer; und
    (iii) mindestens eine Polyolzusammensetzung,

    wobei die Polyolzusammensetzung ein Polyol ausgewählt aus der Gruppe bestehend aus Polyetherolen und mindestens ein Bisphenol-Derivat umfasst, ausgewählt aus der Gruppe bestehend aus Bisphenol-A-Derivaten mit einem Molekulargewicht Mw > 315 g/mol und Bisphenol-S-Derivaten mit einem Molekulargewicht Mw > 315 g/mol, wobei mindestens eine der OH-Gruppen des Bisphenol-Derivats alkoxyliert ist,
    wobei das Polyetherol ausgewählt ist aus der Gruppe bestehend aus Polyethyleneglykolen, Polypropylenglykolen und Polytetrahydrofuranen,
    wobei der Kettenverlängerer und das Bisphenol-Derivat in einem molaren Verhältnis von 3:1 bis 1:1 eingesetzt werden,
    wobei der Kettenverlängerer ein Diol mit einem Molekulargewicht Mw < 220 g/mol ist, und
    wobei das Polyisocyanat ein aliphatisches Diisocyanat ist.

2. Thermoplastisches Polyurethan gemäß Anspruch 1, wobei das mindestens eine Bisphenol-Derivat nur primäre OH-Gruppen aufweist.

3. Thermoplastisches Polyurethan gemäß einem der Ansprüche 1 bis 2, wobei das mindestens eine Bisphenol-Derivat die folgende allgemeine Formel (I) aufweist:

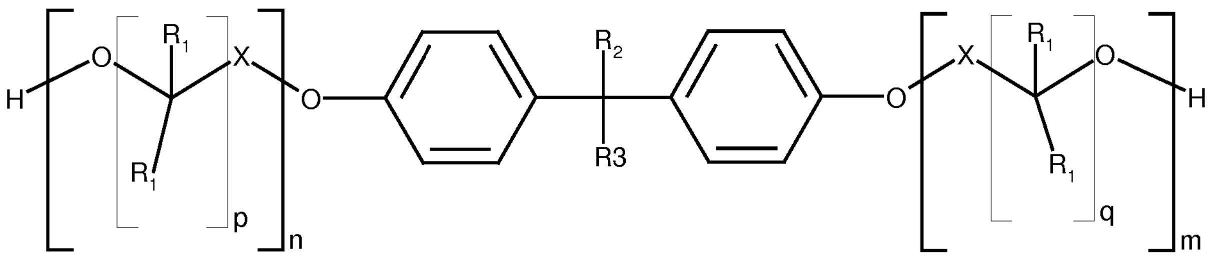

(I)

    wobei

    R1 jeweils unabhängig voneinander eine Methylgruppe oder H ist,
    R2 und R3 eine Methylgruppe sind oder
    R2 -C- R3 zusammen O=S=O sind,

X eine $-C(R1)_2-$, $-C(R1)_2-C(R1)_2-$ oder $-C(R1)_2-C(R1)_2-C(R1)_2-$ -Gruppe darstellt,
p und q unabhängig voneinander eine ganze Zahl von 1 bis 4 sind, und
n und m unabhängig voneinander eine ganze Zahl > 0 sind.

**4.** Thermoplastisches Polyurethan gemäß einem der Ansprüche 1 bis 3, wobei die Polyolzusammensetzung ein Polyol ausgewählt aus der Gruppe bestehend aus Polytetrahydrofuranen mit einem Molekulargewicht Mn im Bereich von 600 g/mol bis 2500 g/mol umfasst.

**5.** Thermoplastisches Polyurethan gemäß einem der Ansprüche 1 bis 4, wobei das Polyisocyanat ausgewählt ist aus der Gruppe bestehend aus 4,4'-, 2,4'- und/oder 2,2'-Methylendicyclohexyldiisocyanat (H12MDI), Hexamethylendiisocyanat (HDI) und 1-Isocyanato-3,3,5-trimethyl-5-isocyanatomethyl-cyclohexan oder Mischungen davon.

**6.** Verfahren zur Herstellung eines thermoplastischen Polyurethans umfassend die Umsetzung

(i) mindestens eines aliphatischen Polyisocyanats;
(ii) mindestens eines Kettenverlängerers; und
(iii) mindestens einer Polyolzusammensetzung,

wobei die Polyolzusammensetzung ein Polyol ausgewählt aus der Gruppe bestehend aus Polyetherolen und mindestens ein Bisphenol-Derivat umfasst, ausgewählt aus der Gruppe bestehend aus Bisphenol-A-Derivaten mit einem Molekulargewicht Mw > 315 g/mol und Bisphenol-S-Derivaten mit einem Molekulargewicht Mw > 315 g/mol, wobei mindestens eine der OH-Gruppen des Bisphenol-Derivats alkoxyliert ist,
wobei das Polyetherol ausgewählt ist aus der Gruppe bestehend aus Polyethyleneglykolen, Polypropylenglykolen und Polytetrahydrofuranen,
wobei der Kettenverlängerer und das Bisphenol-Derivat in einem molaren Verhältnis von 3:1 bis 1:1 eingesetzt werden,
wobei der Kettenverlängerer ein Diol mit einem Molekulargewicht Mw < 220 g/mol ist, und
wobei das Polyisocyanat ein aliphatisches Diisocyanat ist.

**7.** Verfahren gemäß Anspruch 6, wobei das mindestens eine Bisphenol-Derivat die folgende allgemeine Formel (I) aufweist:

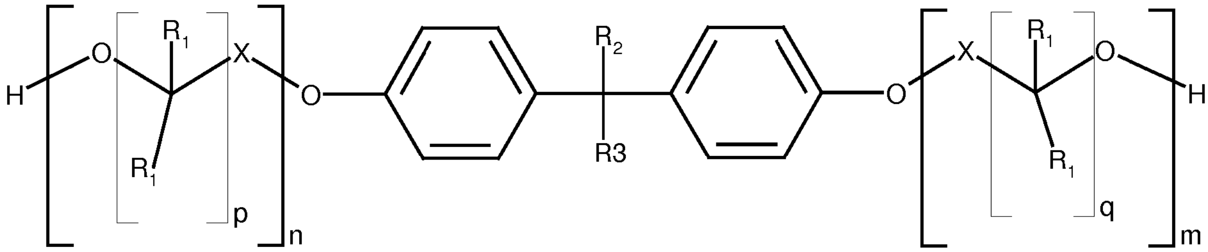

(I)

wobei

R1 jeweils unabhängig voneinander eine Methylgruppe oder H ist,
R2 und R3 eine Methylgruppe sind oder
R2 -C- R3 zusammen O=S=O sind,
X eine $-C(R1)_2-$, $-C(R1)_2-C(R1)_2-$ oder $-C(R1)_2-C(R1)_2-C(R1)_2-$ -Gruppe darstellt,
p und q unabhängig voneinander eine ganze Zahl von 1 bis 4 sind, und
n und m unabhängig voneinander eine ganze Zahl > 0 sind.

**8.** Verwendung eines thermoplastischen Polyurethans nach einem der Ansprüche 1 bis 5 oder eines thermoplastischen Polyurethans erhältlich oder erhalten nach einem Verfahren gemäß einem der Ansprüche 6 oder 7 zur Herstellung von Extrusionsprodukten, Folien und Formkörpern.

**9.** Verwendung gemäß Anspruch 8, wobei der Formkörper eine Linse, eine Scheibe, eine Displayabdeckung oder Abdeckung für einen Scheinwerfer oder eine Leuchte ist.

**10.** Verwendung gemäß Anspruch 8, wobei die Produkte transparente Körper zur Lichtleitung, zur Beleuchtung oder zur Detektion von Licht sind.

**Claims**

**1.** A thermoplastic polyurethane obtainable or obtained by reaction of at least the components (i) to (iii):

(i) at least one aliphatic polyisocyanate;
(ii) at least one chain extender; and
(iii) at least one polyol composition,

where the polyol composition comprises a polyol selected from the group consisting of polyetherols and at least one bisphenol derivative selected from the group consisting of bisphenol A derivatives with a molecular weight Mw > 315 g/mol and bisphenol S derivatives with a molecular weight Mw > 315 g/mol, where at least one of the OH groups of the bisphenol derivative is alkoxylated,
where the polyetherol is selected from the group consisting of polyethylene glycols, polypropylene glycols and polytetrahydrofurans,
where the chain extender and the bisphenol derivative are used in a molar ratio of 3:1 to 1:1,
where the chain extender is a diol with a molecular weight Mw < 220 g/mol, and
where the polyisocyanate is an aliphatic diisocyanate.

**2.** The thermoplastic polyurethane according to claim 1, where the at least one bisphenol derivative has only primary OH groups.

**3.** The thermoplastic polyurethane according to either one of claims 1 to 2, where the at least one bisphenol derivative has the following general formula (I):

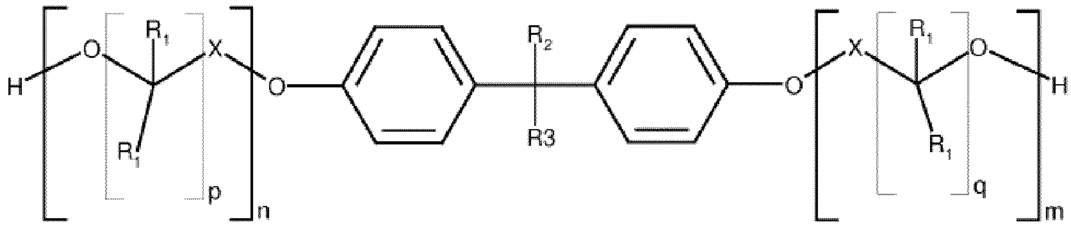

(I)

where

R1 is in each case independently of the others a methyl group or H,
R2 and R3 are a methyl group or
R2-C-R3 together are O=S=O,
X is a $-C(R1)_2-$, $-C(R1)_2-C(R1)_2-$ or $-C(R1)_2-C(R1)_2-C(R1)_2-$ group,
p and q independently of one another are an integer from 1 to 4, and
n and m independently of one another are an integer > 0.

**4.** The thermoplastic polyurethane according to any one of claims 1 to 3, where the polyol composition comprises a polyol selected from the group consisting of polytetrahydrofurans with a molecular weight Mn in the range from 600 g/mol to 2500 g/mol.

**5.** The thermoplastic polyurethane according to any one of claims 1 to 4, where the polyisocyanate is selected from the group consisting of 4,4'-, 2,4'-and/or 2,2'-methylenedicyclohexyl diisocyanate (H12MDI), hexamethylene diisocyanate (HDI) and 1-isocyanato-3,3,5-trimethyl-5-isocyanatomethylcyclohexane or mixtures thereof.

**6.** A process for producing a thermoplastic polyurethane comprising the reaction

(i) of at least one aliphatic polyisocyanate;
(ii) of at least one chain extender; and
(iii) of at least one polyol composition,

where the polyol composition comprises a polyol selected from the group consisting of polyetherols and at least one bisphenol derivative selected from the group consisting of bisphenol A derivatives with a molecular weight Mw > 315 g/mol and bisphenol S derivatives with a molecular weight Mw > 315 g/mol, where at least one of the OH groups of the bisphenol derivative is alkoxylated,
where the polyetherol is selected from the group consisting of polyethylene glycols, polypropylene glycols and polytetrahydrofurans,
where the chain extender and the bisphenol derivative are used in a molar ratio of 3:1 to 1:1,
where the chain extender is a diol with a molecular weight Mw < 220 g/mol, and
where the polyisocyanate is an aliphatic diisocyanate.

**7.** The process according to claim 6, where the at least one bisphenol derivative has the following general formula (I):

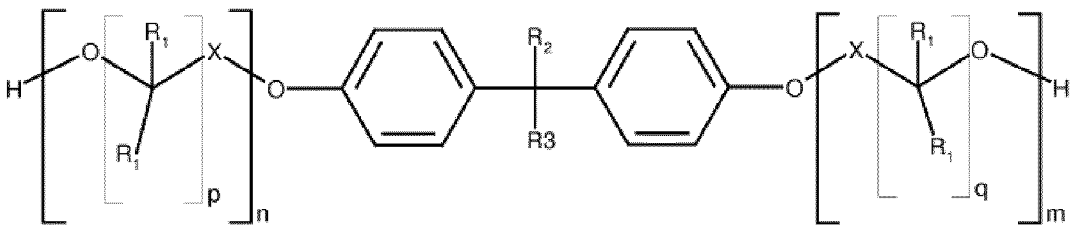

(I)

where

R1 is in each case independently of the others a methyl group or H,
R2 and R3 are a methyl group or
R2-C-R3 together are O=S=O,
X is a $-C(R1)_2-$, $-C(R1)_2-C(R1)_2-$ or $-C(R1)_2-C(R1)_2-C(R1)_2-$ group,
p and q independently of one another are an integer from 1 to 4, and
n and m independently of one another are an integer > 0.

**8.** The use of a thermoplastic polyurethane according to any one of claims 1 to 5 or of a thermoplastic polyurethane obtainable or obtained by a process according to either one of claims 6 and 7 for producing extrusion products, films and moldings.

**9.** The use according to claim 8, where the molding is a lens, a screen, a display cover or cover for a headlight or a lamp.

**10.** The use according to claim 8, where the products are transparent bodies for light guiding, for illumination or for the detection of light.

**Revendications**

**1.** Polyuréthane thermoplastique pouvant être obtenu ou obtenu par transformation au moins des composants (i) à (iii) :

(i) au moins un polyisocyanate aliphatique ;
(ii) au moins un extenseur de chaînes ; et
(iii) au moins une composition de polyol,

la composition de polyol comprenant un polyol choisi dans le groupe constitué par des polyétherols et au moins un dérivé de bisphénol, choisi dans le groupe constitué par des dérivés de bisphénol A dotés d'un poids moléculaire Mw > 315 g/mole et des dérivés de bisphénol S dotés d'un poids moléculaire Mw > 315 g/mole, au moins un des groupes OH du dérivé de bisphénol étant alcoxylé,
le polyétherol étant choisi dans le groupe constitué par des polyéthylèneglycols, des polypropylèneglycols et des polytétrahydrofurannes, l'extenseur de chaînes et le dérivé de bisphénol étant utilisés en un rapport molaire de 3:1 à 1:1, l'extenseur de chaînes étant un diol doté d'un poids moléculaire Mw < 220 g/mole, et
le polyisocyanate étant un diisocyanate aliphatique.

2. Polyuréthane thermoplastique selon la revendication 1, l'au moins un dérivé de bisphénol ne représentant que des groupes OH primaire.

3. Polyuréthane thermoplastique selon l'une quelconque des revendications 1 et 2, l'au moins un dérivé de bisphénol présentant la formule générale suivante (I) :

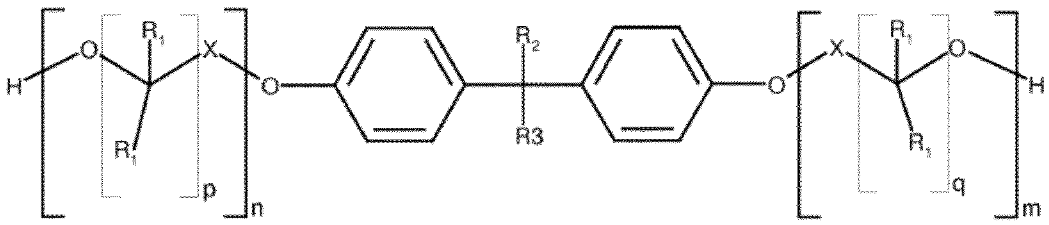

(I)

R1 étant à chaque fois indépendamment les uns des autres un groupe méthyle ou H,
R2 et R3 étant un groupe méthyle ou
R2-C-R3 étant ensemble O=S=O,
X représentant un groupe $-C(R1)_2-$, $-C(R1)_2-C(R1)_2-$ou $-C(R1)_2-C\ (R1)_2-C\ (R1)_2-$,
p et q étant indépendamment l'un de l'autre un nombre entier de 1 à 4, et
n et m étant indépendamment l'un de l'autre un nombre entier > 0.

4. Polyuréthane thermoplastique selon l'une quelconque des revendications 1 à 3, la composition de polyol comprenant un polyol choisi dans le groupe constitué par des polytétrahydrofurannes dotés d'un poids moléculaire Mn dans la plage de 600 g/mole à 2 500 g/mole.

5. Polyuréthane thermoplastique selon l'une quelconque des revendications 1 à 4, le polyisocyanate étant choisi dans le groupe constitué par le 4,4'-diisocyanate de dicyclohexylméthylène, le 2,4'-diisocyanate de dicyclohexylméthylène et/ou le 2,2'-diisocyanate de dicyclohexylméthylène (H12MDI), le diisocyanate d'hexamethylène (HDI) et le 1-isocyanato-3,3,5-triméthyl-5-isocyanatométhyl-cyclohexane et des mélanges correspondants.

6. Procédé pour la préparation d'un polyuréthane thermoplastique comprenant la transformation

(i) d'au moins un polyisocyanate aliphatique ;
(ii) d'au moins un extenseur de chaînes ; et
(iii) d'au moins une composition de polyol,

la composition de polyol comprenant un polyol choisi dans le groupe constitué par des polyétherols et au moins un dérivé de bisphénol, choisi dans le groupe constitué par des dérivés de bisphénol A dotés d'un poids moléculaire Mw > 315 g/mole et des dérivés de bisphénol S dotés d'un poids moléculaire Mw > 315 g/mole, au moins un des groupes OH du dérivé de bisphénol étant alcoxylé,
le polyétherol étant choisi dans le groupe constitué par des polyéthylèneglycols, des polypropylèneglycols et des polytétrahydrofurannes, l'extenseur de chaînes et le dérivé de bisphénol étant utilisés en un rapport molaire de 3:1 à 1:1, l'extenseur de chaînes étant un diol doté d'un poids moléculaire Mw < 220 g/mole, et
le polyisocyanate étant un diisocyanate aliphatique.

7. Procédé selon la revendication 6, l'au moins un dérivé de bisphénol présentant la formule générale suivante (I) :

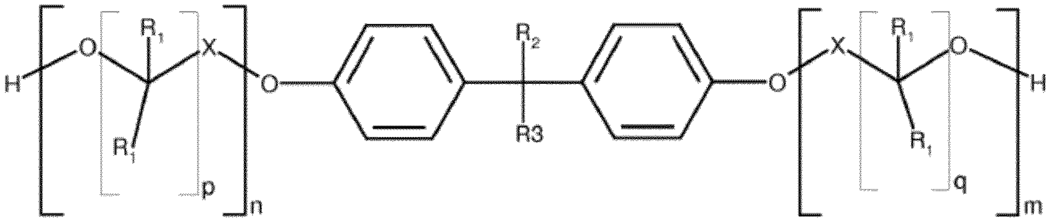

(I)

R1 étant à chaque fois indépendamment les uns des autres un groupe méthyle ou H,
R2 et R3 étant un groupe méthyle ou
R2-C-R3 étant ensemble O=S=O,
X représentant un groupe $-C(R1)_2-$, $-C(R1)_2-C(R1)_2-$ou $-C(R1)_2-C\ (R1)_2-C\ (R1)_2-$,
p et q étant indépendamment l'un de l'autre un nombre entier de 1 à 4, et
n et m étant indépendamment l'un de l'autre un nombre entier > 0.

**8.** Utilisation d'un polyuréthane thermoplastique selon l'une quelconque des revendications 1 à 5 ou d'un polyuréthane thermoplastique pouvant être obtenu ou obtenu par un procédé selon l'une quelconque des revendications 6 et 7 pour la préparation de produits d'extrusion, de feuilles et de corps moulés.

**9.** Utilisation selon la revendication 8, le corps moulé étant une lentille, un disque, une couverture d'affichage ou une couverture pour un phare ou une lampe.

**10.** Utilisation selon la revendication 8, les produits étant des corps transparents pour un guide de lumière, pour l'éclairage ou pour la détection de lumière.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1674494 A
- EP 1394189 A
- EP 0358406 A2
- US 20110281965 A
- JP 2006321950 A


### In der Beschreibung aufgeführte Nicht-Patentliteratur


- Kunststoffhandbuch, Band 7, Polyurethane. Carl Hanser Verlag, 1993, vol. 7
- Kunststoffhandbuch. Carl Hanser Verlag, 1966, vol. VII, 103-113